# EUROPEAN PATENT APPLICATION

(11) **EP 1 912 100 A1**
(43) Date of publication of application: **16.04.2008**
(21) Application number: 07108902.3
(22) Date of filing: 25.05.2007
(51) Int. Cl.: G03G 9/087, G03G 9/08

(54) **Binder resin composition of toner, toner composition and preparation method thereof**

(30) Priority: 12.10.2006 KR 20060099328
(71) Applicant: Samsung Electronics Co., Ltd., Suwon-si, Gyeonggi-do 442-742 (KR)
(72) Inventor: Tsunemi, Koichi, Yeongtong-dong yeontong-gu Suwon-si Gyeonggi-do (KR)
(74) Representative: Moy, David

(57) **Abstract**

A binder resin composition which can sharply, but reversibly, melt and solidify within a narrow temperature range, a toner composition of enhanced low-temperature fixability and durability having the binder resin composition, and a preparation method thereof. The binder resin composition of the toner includes a first polymer compound having a proton donor site in a main chain, and a second polymer compound having a proton acceptor site in a main chain.

## Description

The present general inventive concept relates to a binder resin composition of a toner, a toner composition, and a preparation method thereof, more specifically, to a binder resin composition which can sharply, but reversibly, melt and solidify within a narrow temperature range, a toner composition of enhanced low-temperature fixability and durability having the binder resin composition, and a preparation method thereof.

A toner composition is used in a variety of applications, particularly, in an image forming device to form images. A toner of the toner composition is generally classified into a dry toner and a wet toner. The dry toner is not only simple to prepare, it is also easy to keep and use later. The wet toner is a toner with a liquid carrier, and provides a clearer image quality. However, it is very complicate to prepare the wet toner when compared with the dry toner, the wet toner is difficult to keep, and it requires extra caution to use.

The dry toner is generally prepared by adding a colorant to a binder resin, and a releasing agent, a charge control agent, and other additives are further added later. The additives are classified into internal additives, which are impregnated into toner particles, and external additives, which are added or blended onto the surface of the toner particles. These additives are added primarily to improve diverse properties of the toner or to overcome shortcomings of the toner.

A conventional toner for electrophotography, especially a nonmagnetic 1-component toner, has a heavy load during a developing process. Thus, in order to realize a high durability, it was necessary to use a resin which has a high hardness and a high fusing temperature. However, such a resin was very costly. Additionally, it was difficult to prepare a toner composition which could satisfy both the durability and the low-temperature fixability as required.

In preparation of a toner composition to use in an electronic image forming apparatus, styrene-acrylate copolymers, polyester and the like are usually used. Typically, these resins have a glass transition temperature of about 60°C, so although it may vary depending on a fixing system being used, the fusing temperature of these resins falls within a range of about 120°C to 150°C.

Besides the binder resin, a toner composition can contain usual toner constituents including a colorant, a charge control agent, a releasing agent, and the like. Among them the binder resin's thermal characteristics are known to control the fixing behavior of the toner. This explains why the binder resin is required to be fixed at a lowest possible temperature but at a high speed.

A resin having a low-temperature fixability, namely, a low fusing temperature, can be characterized as one where a mechanical tension of the resin is weak. This is why manufacturers could not sufficiently lower the fusing temperature of the resin even when they could make the low-temperature fixing process be done. Moreover, lowering the glass transition temperature has a negative influence in keeping properties of toner compositions.

Even if the mechanical tension is not great, a toner composition having a low fusing temperature was reported to have poor durability.

In order to improve a trade-off relationship between these physical properties, a number of methods have been suggested.

For example, adding crystalline and low molecular weight polyesters to a commercial polyester (Japanese Patent Publication Nos. 56-65146, 11-2166628, 11-2166631, and 11-2166632), and grafting vinyl polymers to a crystalline polyester (Japanese Patent Publication Nos. 63-57855 and 63-27856) were suggested.

In another suggested method of preparing a toner powder, a mixture of crystalline and amorphous polyesters were blended with a low molecular weight epoxy novolac resin in the presence of a catalyst, such as, phenyl imidazoline, whereby the crystalline polyester sharply melts at a fixing temperature and is cross-linked with the epoxy novolac. The toner powder thus prepared provides good offset latitude after fixing and excellent keep and stability (U.S. Pat. No. 5,057,392).

However, such a toner still left many unresolved problems accompanied with a high reactivity of the epoxy novolac resin. Although a modified polyester having a dendrimer structure had been proposed, it is insufficient to solve the above problems (Japanese Patent Publication No. 2001-242661).

Therefore, there has been a need to develop a method to improve a low-temperature fixability as well as a durability of a toner composition.

Suitably, an aim of the present invention is to provide a binder resin composition, a toner composition, a method to prepare a toner composition, and a method to prepare a binder composition, typically featuring (a) good and/or useful and/or beneficial propert(y)ies, and/or preferably addressing at least one or some of the problems noted above, elsewhere herein, or in the art.

Suitably, a further aim of the present invention is to provide an alternative binder resin composition, toner composition, method to prepare a toner composition, and method to prepare a binder composition, to those already known.

Suitably, a further aim of the present invention or embodiments thereof is to provide a binder resin composition, a toner composition, a method to prepare a toner composition, and a method to prepare a binder composition, with a desirable property or properties.

A further and preferred aim of embodiments of the invention is to provide an improved binder resin composition, toner composition, method to prepare a toner composition, and method to prepare a binder composition, preferably with certain advantageous properties.

A further preferred aim of the present invention or embodiments thereof is to provide a binder resin composition, a toner composition, a method to prepare a toner composition, and a method to prepare a binder composition, having an improved property or improved properties compared to those of the prior art.

Other aims and/or advantages of the invention will be set forth in part in the description herein and, in part, will be obvious from the description, or may be learned by practice of the invention.

According to the present invention there is provided a binder resin composition, a toner composition, a method to prepare a toner composition, and a method to prepare a binder composition, as set forth in the appended claims. Preferred features of the invention will be apparent from the dependent claims, and the description which follows.

The present general inventive concept provides a toner composition of enhanced low-temperature fixability and durability obtained by using a binder resin composition of a toner which can sharply, but reversibly, melt and solidify within a narrow temperature range, and a preparation method thereof.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a binder resin composition of a toner, including a first polymer compound having a proton donor site in a main chain, and a second polymer compound having a proton acceptor site in a main chain.

Thus, in a first aspect the present invention provides a binder resin composition of a toner, comprising:
a first polymer compound having a proton donor site in a main chain; and
a second polymer compound having a proton acceptor site in a main chain.

The binder resin may preferably have a glass transition temperature in a range of 60°C to 65°C, and preferably a melting point in a range of 100°C to 120°C.

The binder resin may preferably have a rate of change of storage modulus dlogE'/dT of 0.3 or higher at the melting temperature.

Preferably, at least one of the first polymer compound and the second polymer compound has an ester bond in a backbone thereof.

Preferably, the first polymer compound can be selected from a group consisting of polycarboxylic acids, polyvinylalcohol, polyvinylamine, polyarylamine, and hydrolysates of maleic anhydride.

Preferably, the polycarboxylic acid can be a polyacrylic acid, a polymetacrylic acid, and the like.

Preferably, the second polymer compound can be selected from a group consisting of a polyether, a vinyl polymer having a cyclic amide in a side chain, polyamides, polyurethanes, polyvinyl acetate, polyvinyl acetal, polyvinyl butyral, and polymers containing maleic anhydride.

Preferably, the polyether can be a polyethylene oxide, polypropylene oxide, and the like, and the vinyl polymer can be polyvinyl pyrolydon and the like.

Preferably, the first and second polymer compounds may have a number average molecular weight of 300 or greater, respectively.

The foregoing and/or other aspects and utilities of the present general inventive concept may also be achieved by providing a toner composition including a colorant, and a binder resin including a first polymer compound having a proton donor site in a main chain, and a second polymer compound having a proton acceptor site in a main chain.

Thus, in a second aspect of the present invention there is provided a toner composition, comprising:
a colorant; and
a binder resin comprising:
   a first polymer compound having a proton donor site in a main chain, and
   a second polymer compound having a proton acceptor site in a main chain.

The binder resin may preferably have a glass transition temperature in a range of 60°C to 65°C, and preferably a melting point in a range of 100°C to 120°C.

Preferably, the binder resin may have a rate of change of storage modulus dlogE'/dT of 0.3 or higher at the melting temperature.

Preferably, at least one of the first and the second polymer compounds may have an ester bond in a backbone, respectively.

Preferably, the toner composition may further contain a releasing agent and a charge control agent. Preferably, the releasing agent may be wax and preferably, the charge control agent may be a metal salt.

The foregoing and/or other aspects and utilities of the present general inventive concept may also be achieved by providing a method to prepare a toner composition, including preparing a binder resin composition by mixing a first polymer compound having a proton donor site in a main chain with a second polymer compound having a proton acceptor site in a main chain, and adding a colorant to the prepared binder resin composition.

Thus, in a third aspect of the present invention there is provided a method to prepare a toner composition, comprising:
preparing a binder resin composition by mixing a first polymer compound having a proton donor site in a main chain with a second polymer compound having a proton acceptor site in a main chain; and
adding a colorant to the prepared binder resin composition.

The foregoing and/or other aspects and utilities of the present general inventive concept may also be achieved by providing a method to prepare a binder composition of a toner, the method including mixing a first polymer compound with a second polymer compound, wherein the first polymer compound has a plurality of proton donor sites in a main chain.

Thus, in a fourth aspect of the present invention there is provided a method to prepare a binder composition of a toner, the method comprising:
mixing a first polymer compound with a second polymer compound,
wherein the first polymer compound has a plurality of proton donor sites in a main chain.

Preferably, the proton donor sites may include at least one of a primary or secondary amino (-NH₂, or -NH) functional group, a carboxylic (-COOH) functional group, and a hydroxyl (-OH) functional group.

Preferably, the second polymer compound may have a plurality of proton acceptor sites in a main chain.

Preferably, the proton acceptor sites may include at least one of a carbonyl (-CO-) functional group, a tertiary amino (>N-) functional group, a sulfonyl (>SO₂) functional group, and an ether (-R-O-) functional group.

Preferably, the first polymer may include a polyester, and one of an acidic value and a hydroxyl value of the polyester is such that the second polymer compound has a plurality of proton acceptor sites in a main chain, the proton acceptor sites including at least one of a carboxylic (-COOH) and a hydroxyl (-OH) functional group as proton acceptor sites.

Preferably, at least one of the first polymer and second polymer compounds may include an ester in a backbone thereof.

Where applicable, features and embodiments of any aspects of the present invention, as described herein, may be regarded as preferred features and embodiments of any of the other aspects of the present invention.

Reference will now be made in detail to the embodiments of the present general inventive concept. The embodiments are described below in order to explain the present general inventive concept.

Typically, when a binder of a toner composition needs to be synthesized, cautions should be noted as follows:
(1) Influence on human body and environment;
(2) Cost;
(3) The binder must not be decomposed by thermal fusion, and should not produce volatile organic compounds (VOCs);
(4) The binder should have a storage modulus of 10E5 Pa or higher at room temperature, constant at the fusing temperature (although it is different depending on molecular design, it normally ranges from 80°C to 120°C), and sharply declining to 10E1 to 10E2 Pa at the melting temperature;
(5) The binder's tanδ after fusion should range from about 1 to 10;
(6) The binder should be excellent in dispersion of other constituents of the toner composition, such as, a pigment as a colorant and wax as a releasing agent;
(7) The binder should be crushed and classified efficiently to 5-7 µm by a known mechanical crushing or impact crushing followed by a known classification method, and must not be reaggregated after the crushing-classification process;
(8) When used to prepare a toner composition, the binder must have a sufficient fluidity at least for 24 hours at 50°C; and
(9) Charge control or fluidity control should be possible by a charge control agent and/or an external additive, such as, silica and the like.

Although certain effects were accomplished by adding a mixture of crystalline and amorphous polyesters (optionally) blended with a crystalline compound, effects like a sharp melting were hard to expect. As such, a polymer mixture that can form an interpolymer complex having a phase transitionable hydrogen bond around a desired fixing temperature can be used as an element to be added to the amorphous polyester.

Therefore, a binder resin composition of a toner according to an exemplary embodiment of the present general inventive concept may include a first polymer compound having a proton donor in the main chain, and a second polymer compound having a proton acceptor in the main chain, the proton donor and the proton acceptor being able to hydrogen bond to each other.

Principles to improve a fixability and a durability of the toner by using such a hydrogen bond are as follows.

It has been reported that in a polymer mixture containing two or more constituents molecular interactions among respective polymer chains, for example, a hydrogen bond, an ionic bond, a hydrophobic interaction, and the like, produce a complex, and bring big changes in diverse physical properties (e.g., elastoviscous behavior) (Molecular Aggregate - its Organization and Functions - Chem, General Remarks No. 40,187 (1983), J. Polymer Sci., Polym. Chem. Ed., 13, 1505 (1975)).

In general, those molecular interactions are temperature-dependent, so they are either destroyed as the temperature rises or become stronger as the temperature falls.

Particularly, in the case of the hydrogen bond, its interaction becomes weaker by a temperature increase and is eventually broken when the temperature rises continuously. It has also been reported that if a hydrogen-bondable proton donor is mixed with a proton acceptor, even though a viscosity and elastic modulus of the entire system increases around room temperature by intermolecular bonds, they rapidly decline when the system is heated to induce a temperature increase, and thus, the intermolecular bonds therein are broken (Macromolecules, 37, 3519 (2004), Adv. Mater.12,874 (2000), Chem. Mater., 16,3582 (2004)).

There is a possibility, though, to decrease the fixing temperature and to improve the durability and stability of a toner by setting a physical property transition temperature around a desired fixing temperature of the toner. This is because in the system, the additive elements around room temperature have a high glass transition temperature due to the intermolecular complex formation, so the durability of the toner can be kept stable.

However, at a temperature higher than the transition temperature, the elements originally added to break the intermolecular bonds act as plasticizers of main ingredients, like polyester, to thereby transit the glass transition temperature and melting point of the entire toner to low temperatures.

Therefore, in a case of a binder resin containing a first polymer compound with a proton donor site and a second polymer compound with a proton acceptor site, both sites can be used to reversibly realize low-temperature fixability through hydrogen bonds and dissociation.

Since the hydrogen bond is weak compared to the ionic bond and the covalent bond, it may be important that proton donor sites and proton acceptor sites bond at multipoints (at least two) in order for polymer chains to reversibly bond and dissociate through an introduction of the hydrogen bond.

The first polymer compound having the proton donor site may be a compound that contains a functional group selected from a primary or secondary amino (-NH₂, or -NH) group, a carboxylic (-COOH) group, and a hydroxyl (-OH) group. The second polymer compound having the proton acceptor site may be a compound that contains a functional group selected from a carbonyl (-CO-) group, a tertiary amino (>N-) group, a sulfonyl (>SO₂) group, and an ether (-R-O-) group.

In particular, polyester used in a toner composition may have an ester bond acting as a proton acceptor, and reaction residues -COOH- group and -OH group acting as a proton donor. Accordingly, the binder resin composition according to the present exemplary embodiment of the general inventive concept may be prepared by using additives that are capable of hydrogen bonding to such functional groups, and at least one of the first polymer compound and the second polymer compound may have an ester bond to its backbone.

For example, polyester can be blended with a polymer compound having a proton donor site by using a carbonyl group at the ester bond site of the polyester as a proton acceptor site.

In this case, the polymer compound added to polyester may be an oligomer with the number average molecular weight (Mn) of 1000 or less and having a high concentration of -COOH- group and -OH group. For example, a polyester oligomer having such residues can be used.

When used in polymerized form, 2 to 4 dibasic acids, diol, triol, and tetraol monomers may be used. A dehydration polycondensation reaction can be carried out for these monomers to leave more than 10 functional residues per molecule as proton donors.

Besides the polyester oligomers, examples of the first polymer compound having a proton donor site include, but are not limited to, polycarboxylic acids including a polyacrylic acid, a polymetacrylic acid, and so on, and hydrolysates from polymers including polyvinylalcohol, polyvinylamine, polyarylamine, and maleic anhydride.

A polymer compound of low molecular weight has a high concentration of functional residues that can become proton donor sites, but the polymer compound may not be involved in a hydrogen bond, the residues may be easily removed (or isolated), and vapor pressure is more likely to increase. In consideration of such facts, the number average molecular weight of the polymer compound can be 300 or more.

The reaction residue concentration can be checked by measuring an acidic value in the case of -COOH group and a hydroxy value in the case of -OH group. If at least one of the acidic value and the hydroxy value is not lower than 5, or if the sum of both is not lower than 5, the multipoint hydrogen bonding can be constructed.

From an aspect of compatibility, an oligomer can be used as the binder resin of a toner.

Differently from the above, the -COOH residue or the -OH reside may be used as a proton donor depending on the acidic value or the hydroxy value of polyester. The polyester is then mixed with the second polymer compound having a proton acceptor site (e.g., ether group, etc.) hydrogen bonding to the polyester, to thereby prepare a binder resin according to an embodiment of the present general inventive concept.

Examples of the second polymer compound include, but are not limited to, a polyether, such as, polyethylene oxide, polypropylene oxide, and the like, a vinyl polymer having a cyclic amide, such as, polyvinyl pyrolydon, and the like, in a side chain, polyamides, polyurethanes, polyvinyl acetate, polyvinyl acetal, polyvinyl butyral, and polymers containing maleic anhydride.

The binder resin composition may have a glass transition temperature between 60°C and 65°C, and a melting point between 100°C and 120°C. These limits are set primarily because of the hydrogen bonds between proton donor sites and proton acceptors in the first and second polymer compounds. Here, the binder resin composition of a toner according to the exemplary embodiment of the present general inventive concept has a storage modulus that changes dramatically with respect to a change in temperature.

For example, a rate of change of the storage modulus around the melting point (dlogE'/dT) of the binder resin composition according to the present general inventive concept is 0.5 or greater, which is much higher than the 0.1 for a conventional binder resin. Accordingly, the storage modulus at room temperature is maintained with heating to approximately the melting point and sharply declines at a temperature where the hydrogen bonds are dissociated (this phenomenon is so called a "sharp melt" property).

The binder resin composition may have a rate of change of the storage modulus, dlogE'/dT, of 0.3 or greater around its melting point.

Another exemplary embodiment of the present general inventive concept provides a toner composition which includes a colorant, and a binder resin composition containing a first polymer compound having a proton donor site in the main chain and a second polymer compound having a proton acceptor site in the main chain.

The colorant added to the toner composition in addition to the binder resin composition of the toner provides a color to toner particles. Colorants are largely divided into dye colorants and pigment colorants. Any type of generally used colorants may be used as a colorant for the present general inventive concept. Although the pigment colorants excellent in thermal stability and lightproofness may be used, disperse dyes may also be used.

Examples of the pigment colorant to use in the toner composition of the present general inventive concept include, but are not limited to, azo pigments, phthalocyanine pigments, basic dyes, quinacridone pigments, dioxazine pigments, diazo pigments, chromates, ferrocyanice, oxides, selenium sulfide, sulfate, silicate, carbonate, phosphate, metal powder, and carbon black.

The toner composition according to an exemplary embodiment of the present general inventive concept further may include a releasing agent and a charge control agent.

The releasing agent is an additive to prevent toner offset. For example, a wax can be used as the releasing agent. Examples of such wax include, but are not limited to, polyethylene, polypropylene, ester, and carnauba wax.

Wax may not be compatible with the binder resin in the toner. During fixing, molten wax may appear on a surface of the toner and may form a layer of low surface energy between fixing rollers, to thereby prevent offset. The wax can be 2 to 4 µm in thickness.

Even if synthetic esters and natural waxes, e.g., carnauba wax, rice wax, and the like, have functions groups that can act as a proton donor and/or a proton acceptor, they have a low compatibility with the resin, exerting an offset prevention effect. Therefore, these particular waxes do not effectively contribute to hydrogen bonding to the resin.

This is why other waxes, beside the above-described waxes, may also be used, for example, paraffin wax, olefin wax, a synthetic hydrocarbon wax by Fischer-Tropsch method, and so on.

The charge control agent (CCA) is an additive to control a chargeability of the toner. Depending on a polarity of the toner, charge control agents can be classified into a positive CCAs and a negative CCAs. Examples of the positive CCA include nigrocine, denatured styrene-acrylate charge control resins, and the like. Since most of negative CCAs are low molecular weight substances, they can also be used for the toner composition of the present general inventive concept.

Some CCAs have a structure becoming a proton donor and/or a proton acceptor. However, because the CCA is typically crystalline and is not compatibly used with the binder resin composition of the toner, it does not effectively contribute to hydrogen bonding.

Moreover, another exemplary embodiment of the present general inventive concept provides a preparation method of a toner composition that may include preparing a binder resin composition by mixing a first polymer compound that has a proton donor site in the main chain with a second polymer compound that has a proton acceptor site in the main chain, and adding a colorant to the binder resin composition thus prepared.

Besides the colorant, other additives can be added to the binder resin composition of the toner to prepare a desired toner composition according to the general inventive concept. The resulting mixture is fused and kneaded, is cooled to a solid form, and is subjected to a crushing and classification process to sort particles by sizes and to adjust the particle size distribution.

Average particle size varies upon necessity, but the volume average particle diameter ranges from 4 to 13 µm, and may also be from 5 to 10 µm. In addition, the particle size distribution particles of 20 µm or greater in size occupy 0.1% or less with respect to the standard volume particle diameter. Although dependent on the average particle size, the fraction of particles having an approximate particle size of 5µm is not greater than 30%, given that the volume average particle diameter is 7 µm.

According to the embodiments of the present general inventive concept, thermal properties of the resin can be controlled by using the reversible hydrogen bonding and dissociation, so that a viscosity of the heat-fused resin is lower than that of the conventional resin. This is why a kneading method may be recommended to ensure a sufficient dispersibility by imparting a shear stress (or shear force) to each ingredient in a low viscous state. However, if the temperature is too high or too much shear stress is applied, problems, such as, breakage of molecular chains in the resin may occur. Hence, the kneading method must be used with caution in consideration of the change in molecular weight (especially the decrease in molecular weight). If necessary, the resin material may be kneaded at a temperature lower than its melting point to impart a high shear stress.

Following the fusion-kneading process, necessary materials are subjected to the quenching and crystal crushing processes to produce powder of 100-800 µm. Although the powder is pulverized next, it may be crushed as small as 10-50 µm before carrying out the pulverization.

Pulverization or grinding can be done by an impact grinder, a mechanical grinder, a counter jet mill, and the like, in consideration of the arriving particle size, yield, production capability, etc. For the classification process, a classifier can be selected from a wind energy classifier which utilizes centrifugal force given to particles, a mechanical classifier which classifies fine powders by rotating a rotor at a high speed, a 3-partitioned classifier which utilizes Coanda effect, and the like, in consideration of a classification point, classification precision, yield, throughput, and the like.

Subsequently, external additives, such as silica, can be adequately provided to control a chargeability and a fluidity of the toner. External addition can be carried out after the classification. External addition is one of processes that may help govern performances of the toner, namely, a charge amount control, a fluidity control, a giving durability, and the like. Besides silica with a dehydrated surface, one to six different kinds external additives can be selected from dehydrated, electrically conducted or crude titanates inclusive of titania, alumina, SrTiO₃, BaTiO₃ and the like may be used singly or in combination. Toner powders and external additives can be mixed in a commonly used rotating mixer like Henschel mixer for example, or in Mechano Hybrid type mixer manufactured by Mitsui Mining Co., Ltd., which has a high-speed agitating spherical chamber if a high-speed agitation is desired.

A rotation speed of a blade in the interior of an external-addition machine, external addition time, and injection sequence of external additives are set different according to toners, and they may be optimized for each case.

### Examples

Hereinafter, the present general inventive concept will be described by way of preparation of a binder resin composition of a toner and a toner composition using the same in Examples 1 and 2. Even though specific examples are illustrated to describe the method to prepare the binder resin composition of a toner and the toner composition thereof, it should be clearly understood that the present general inventive concept is not limited to these examples.

### Example 1

An almost linear polyester (Mw/Mn=1.8 and Mn=6,000) was prepared. The polyester has an acidic value of 6 mgKOH/g.polymer and a hydroxy value of 8 mgKOH/g.polymer. To obtain the acidic value, polyester was titrated with KOH, an acetic anhydride was dissociated with an OH residue, and a back titration method was carried out on acetic acid with KOH. The glass transition temperature of polyester was 60.5°C, and the melting point (1/2 outflow temperature of a flow tester) of polyester was 101°C. The melting point was determined under conditions of a temperature increasing rate of 3°C/min, a load of 20 kg, and dye 1 mmΦ10mmt.

1g of polyester was then mixed with 0.3g of polyvinyl alcohol (average molecular weight = 3000) as a proton donor, and the mixture was subjected to a fusion-kneading process to produce a hydrogen bonding polymer complex. Although the complex showed almost no change in its glass transition temperature, an increase in the melting point was observed (melting point = 122°C).

When temperature properties of viscoelasticity were measured, the starting polyester had dlogE'/dT of 0.1 in a temperature range of 100°C to 140°C, while the hydrogen bonding complex of this example had dlogE'/dT of 0.34 in a temperature range of 100°C to 120°C.

The complex was then mixed with 3% of carbon black, 1.0% of a negative charge control agent, and 2% of carnauba wax, fusion-kneaded, and crushing-classified to produce particles of 6.0 µm.

To the powder was added 1.0% of silica having a dehydrated surface by HMDS of 300 m² of non-surface area by a BET method, and 1.5% of silica having a dehydrated surface by PDMS of 50 m² of the same. 2kg of the toner and other external additives were mixed at the above-described mixing ratio in a 20 liter Henschel mixer. External addition was carried out at 2400 rpm for 90 seconds. The toner composition finally obtained had a particle size of 75 µm.

For evaluation, the toner composition thus prepared was put in the black cartridge of a color laser printer CLC-600 (manufactured by Samsung Electronics Co., Ltd.) and a running test was conducted until the toner was gone. It turned out the toner could print up to 4,000 sheets of good quality images without defects. In addition, gloss property of the images was satisfactory.

### Example 2

Polyester (Mw/Mn=1.5 and Mn=4,000) was prepared. The polyester has an acidic value of 40 mgKOH/g.polymer and a hydroxy value of 20 mgKOH/g.polymer. To obtain the acidic value, polyester was titrated with KOH, an acetic anhydride was dissociated with an OH residue, and a back titration method was carried out on acetic acid with KOH. The glass transition temperature of polyester was 57.5°C, and the melting point (1/2 outflow temperature of a flow tester) of polyester was 88°C. The melting point was determined under conditions of a temperature increasing rate of 3°C/min, a load of 20 kg, and dye 1 mmΦ10mmt.

1g of polyester was then mixed with 0.8g of polyvinyl alcohol (average molecular weight = 3000) as a proton donor, and the mixture was subjected to a fusion-kneading process to produce a hydrogen bonding polymer complex. Although the complex showed almost no change in its glass transition temperature, an increase in the melting point was observed (melting point = 115°C).

When temperature properties of viscoelasticity were measured, the starting polyester had dlogE'/dT of 0.15 in a temperature range of 100°C to 140°C, while the hydrogen bonding complex of this example had dlogE'/dT of 0.45 in a temperature range of 110°C to 125°C.

The complex was then mixed with 3% of carbon black, 1.0% of a negative charge control agent, and 2% of carnauba wax, fusion-kneaded, and crushing-classified to produce particles of 6.0 µm.

To the powder was added 1.0% of silica having a dehydrated surface by HMDS of 300 m² of non-surface area by a BET method, and 1.5% of silica having a dehydrated surface by PDMS of 50 m² of the same. 2kg of the toner and other external additives were mixed at the above-described mixing ratio in a 20 liter Henschel mixer. External addition was carried out at 2400 rpm for 90 seconds. The toner composition finally obtained had a particle size of 75 µm.

For evaluation, the toner composition thus prepared was put in the black cartridge of a color laser printer CLC-600 (manufactured by Samsung Electronics Co., Ltd.) and a running test was conducted until the toner was gone. It turned out the toner could print up to 4,000 sheets of good quality images without defects. In addition, gloss property of the images was satisfactory.

As explained so far, the binder resin composition according to the present general inventive concept sharply, but reversibly, melts and solidifies within a narrow temperature range, and therefore the toner composition prepared using the same demonstrated enhanced low-temperature fixability and durability.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A binder resin composition of a toner, comprising:
a first polymer compound having a proton donor site in a main chain; and
a second polymer compound having a proton acceptor site in a main chain.

2. The binder resin composition of claim 1, wherein the binder resin composition has a glass transition temperature in a range of 60°C to 65°C, and a melting point in a range of 100°C to 120°C.

3. The binder resin composition of either of claims 1 and 2, wherein the binder resin composition exhibits a rate of change of storage modulus dlogE'/dT of 0.3 or higher at the melting temperature.

4. The binder resin composition of any preceding claim, wherein at least one of the first polymer compound and the second polymer compound has an ester bond in a backbone thereof.

5. The binder resin composition of any preceding claim, wherein the first polymer compound is selected from a group consisting of polycarboxylic acids, polyvinylalcohol, polyvinylamine, polyarylamine, and hydrolysates of maleic anhydride.

6. The binder resin composition of claim 5, wherein the polycarboxylic acid is one of a polyacrylic acid and a polymetacrylic acid.

7. The binder resin composition of any preceding claim, wherein the second polymer compound is selected from a group consisting of a polyether, a vinyl polymer having a cyclic amide in a side chain, polyamides, polyurethanes, polyvinyl acetate, polyvinyl acetal, polyvinyl butyral, and polymers containing maleic anhydride.

8. The binder resin composition of claim 7, wherein the polyether is one of polyethylene oxide and polypropylene oxide, and the vinyl polymer is polyvinyl pyrolydon.

9. The binder resin composition of any preceding claim, wherein the first and second polymer compounds have a number average molecular weight of 300 or greater, respectively.

10. A toner composition, comprising:
a colorant; and
a binder resin comprising:
a first polymer compound having a proton donor site in a main chain, and
a second polymer compound having a proton acceptor site in a main chain.

11. The toner composition of claim 10, wherein the binder resin composition has a glass transition temperature in a range of 60°C to 65°C, and a melting point in a range of 100°C to 120°C.

12. The toner composition of either of claims 10 and 11, wherein the binder resin composition has a rate of change of storage modulus dlogE'/dT of 0.3 or higher at the melting temperature.

13. The toner composition of any of claims 10 to 12, wherein at least one of the first and the second polymer compounds have an ester bond in a backbone, respectively.

14. The toner composition of any of claims 10 to 13 further comprises:
a releasing agent; and
a charge control agent.

15. The toner composition of claim 14, wherein the releasing agent is wax.

16. The toner composition of claim 14, wherein the charge control agent is a metal salt.

17. A method to prepare a toner composition, comprising:
preparing a binder resin composition by mixing a first polymer compound having a proton donor site in a main chain with a second polymer compound having a proton acceptor site in a main chain; and
adding a colorant to the prepared binder resin composition.

18. A method to prepare a binder composition of a toner, the method comprising:
mixing a first polymer compound with a second polymer compound,
wherein the first polymer compound has a plurality of proton donor sites in a main chain.

19. The method of claim 18, wherein the proton donor sites comprise at least one of a primary or secondary amino (-NH₂, or -NH) functional group, a carboxylic (-COOH) functional group, and a hydroxyl (-OH) functional group.

20. The method of either of claims 18 and 19, wherein the second polymer compound has a plurality of proton acceptor sites in a main chain.

21. The method of claim 20, wherein the proton acceptor sites comprise at least one of a carbonyl (-CO-) functional group, a tertiary amino (>N-) functional group, a sulfonyl (>SO₂) functional group, and an ether (-R-O-) functional group.

22. The method of any of claims 18 to 21, wherein the first polymer comprises a polyester, and one of an acidic value and a hydroxyl value of the polyester is such that the second polymer compound has a plurality of proton acceptor sites in a main chain, the proton acceptor sites comprising at least one of a carboxylic (-COOH) and a hydroxyl (-OH) functional group as proton acceptor sites.

23. The method of any of claims 18 to 22, wherein at least one of the first polymer and second polymer compounds comprises an ester in a backbone thereof.
